# EUROPÄISCHE PATENTSCHRIFT

(11) **EP 1 456 028 B1**
(45) Veröffentlichungstag und Bekanntmachung des Hinweises auf die Patenterteilung: **24.05.2006**
(21) Anmeldenummer: 02792911.6
(22) Anmeldetag: 05.12.2002
(51) Int. Cl.: B32B 27/18, B32B 27/20

(54) **MEHRSCHICHTIGE WITTERUNGSBESTÄNDIGE GEFÄRBTE PLATTE**
MULTI-LAYER, WEATHER-RESISTANT, COLOURED PANEL
PANNEAU MULTICOUCHE TEINT, RESISTANT AUX INTEMPERIES

(30) Priorität: 10.12.2001 DE 10160569; 05.11.2002 DE 10251323
(43) Veröffentlichungstag der Anmeldung: 15.09.2004
(73) Patentinhaber: Bayer MaterialScience AG, 51368 Leverkusen (DE)
(72) Erfinder: GORNY, Rüdiger, Moon Twp., PA 15108 (US); ANDERS, Siegfried, 51147 Köln (DE); NISING, Wolfgang, 53757 St. Augustin (DE); EBERT, Wolfgang, 47800 Krefeld (DE); MALEIKA, Robert, 40545 Düsseldorf (DE); DÖBLER, Martin, 40593 Düsseldorf (DE); MÖTHRATH, Melanie, 40227 Düsseldorf (DE)
(86) Internationale Anmeldenummer: PCT/EP2002/013814
(87) Internationale Veröffentlichungsnummer: WO 2003/049940

(56) Entgegenhaltungen:
- EP-A- 0 569 878
- DE-A- 19 630 817
- US-A- 4 927 675
- US-A- 5 055 346

## Beschreibung

Die vorliegende Erfindung betrifft ein mehrschichtiges Erzeugnis enthaltend drei Schichten A, B und C. Dabei enthält Schicht A ein Basismaterial ausgewählt aus der Gruppe bestehend aus einem transparenten thermoplastischen Kunststoff und einem Lack. Außerdem enthält Schicht A einen UV-Absorber. Schicht B enthält einen transparenten thermoplastischen Kunststoff und mindestens ein Farbmittel. Schicht C enthält einen transparenten thermoplastischen Kunststoff gegebenenfalls mit weniger Farbmittel als B.

EP-A 0 359 622 offenbart dreischichtige Platten. Eine erste Schicht besteht aus Polycarbonat, eine darüber liegende zweite Schicht aus Polycarbonat, das einen flüchtigen UV-Absorber enthält und eine darüber liegende dritte Schicht aus Polycarbonat, das einen weniger flüchtigen UV-Absorber enthält. Platten enthaltend Farbmittel werden in EP-A 0 359 622 nicht offenbart.

WO 02/38882 offenbart zweischichtige Platten, die ein anorganisches Farbpigmente in einer der beiden Schichten enthalten (der dünneren, sogenannten Coextrusionsschicht). Diese Platten haben eine größere Brandfestigkeit als Platten, die ein anorganisches Farbpigmente in der dickeren Basisschicht enthalten.

EP-A 0 548 822 offenbart zweischichtige Platten aus transparenten thermoplastischen Kunststoffen, die in der Deckschicht IR-reflektierende anorganische Pigmente enthalten.

EP-A 0 657 280 beschreibt ein Verfahren zur Herstellung von mindestens zweischichtigen Polycarbonat-Platten. Die Überzugsschicht enthält 10 bis 30 Gew.-% metallisch glänzende Partikel der Größe 200 bis 500 µm und gegebenenfalls auch UV-Absorber. Darüber kann eine Schicht coextrudiert werden, die Polycarbonat und UV-Absorber enthält.

EP-A 0 774 551 beschreibt coextrudierte Polycarbonat-Platten, die zweischichtig oder dreischichtig sein können. Eine Schicht muss IR-undurchlässig sein. Mindestens eine Schicht kann UV-Absorber enthalten.

JP-A 10 077 360 offenbart Zusammensetzungen, die UV-Absorber und IR-Absorber enthalten, und in denen der UV-Absorber einen Gewichtsanteil von mehr als dem Zehnfachen des IR-Absorbers enthält. Als bevorzugte Ausführungsform wird ein mindestens zweischichtiges System offenbart, in dem die äußere Schicht UV-Absorber enthält und die darunter liegende Schicht IR-Absorber und gegebenenfalls UV-Absorber.

DE-A 10 117 785 offenbart ein transparentes Mehrschichtsystem aus drei Schichten (1, 2 und 3), das den folgenden Aufbau hat. Schicht 1 enthält mindestens einen organischen IR-Absorber und mindestens einen UV-Absorber, Schicht 2 enthält mindestens einen UV-Absorber. Optional kann Schicht 3 vorhanden sein. Sie enthält weder IR-Absorber noch UV-Absorber.

DE 196 30817 offenbart eine dreischichte PET-Platte mit einer zentralen eingefärbten Basis-Schicht.

Gefärbte Erzeugnisse, zum Beispiel Platten, die aus dem Stand der Technik bekannt sind, haben folgende Nachteile.

Zweischichtige Systeme aus WO 02/38882 sind nicht ausreichend witterungsstabil und Systeme, die die Farbmittel in der Basisschicht enthalten, können eine verringerte Witterungsstabilität aufweisen, wenn die Schicht A fehlt, sie können eine verringerte Schlagzähigkeit gegenüber dem erfindungsgemäßen Systemen haben.

Außerdem haben sie Nachteile, was ihre Herstellung anbelangt. Nach Ihrer Herstellung durch Extrusion muss Extruder sauber gefahren werden wobei viel Rohstoff verbraucht wird.

Der vorliegenden Erfindung liegt die Aufgabe zu Grunde, ein Erzeugnis bereit zu stellen, das dem menschlichen Auge in der Durchsicht den gleichen visuellen Eindruck vermittelt, wie die aus dem Stand der Technik bekannten gefärbten Erzeugnisse (das also "gefärbt" ist oder erscheint) und das die oben beschriebenen Nachteile der aus dem Stand der Technik bekannten Erzeugnisse nicht aufweist.

Diese Aufgabe wird gelöst durch ein mehrschichtiges Erzeugnis enthaltend
a) eine Schicht A enthaltend ein Basismaterial ausgewählt aus der Gruppe bestehend aus einem transparenten thermoplastischen Kunststoff und einem Lack und enthaltend mindestens einen UV-Absorber,
b) eine Schicht B enthaltend einen transparenten thermoplastischen Kunststoff und enthaltend mindestens ein Farbmittel
c) und eine Schicht C enthaltend einen transparenten thermoplastischen Kunststoff, gegebenenfalls mit Farbmitteln.

Bevorzugt ist ein mehrschichtiges Erzeugnis, bei dem die Schicht B eine Dicke von 1 bis 500 µm, bevorzugt von 5-300 µm, hat, die Schicht A 0,01 bis 10 mal so dick, bevorzugt 0,1 bis 3 mal so dick, ist wie die Schicht B und die Schicht C 20 bis 10000 mal so dick, bevorzugt 30 bis 8000, besonders 50-5000 mal so dick, ist wie die Schicht B.

Bevorzugt ist das mehrschichtige Erzeugnis ausgewählt aus der Gruppe bestehend aus einer Platte, einer Folie, einem Rohr und einem Profil.

Dieses mehrschichtige Erzeugnis ist Gegenstand der vorliegenden Erfindung.

Weiterhin ist Gegenstand der vorliegenden Erfindung ein Verfahren zur Herstellung dieses mehrschichtigen Erzeugnisses umfassend eine Coextrusion der Schichten A, B und C.

Weiterhin ist Gegenstand der vorliegenden Erfindung ein Verfahren zur Herstellung dieses mehrschichtigen Erzeugnisses umfassend das Aufbringen der Schicht A durch Lackierung auf ein Substrat, das die Schichten B und C umfasst.

Das erfindungsgemäße mehrschichtige Erzeugnis hat zahlreiche Vorteile. Es hat eine hohe Witterungsbeständigkeit. Es ist transparent oder transluzent.

Ein Vorteil des erfindungsgemäßen mehrschichtigen Erzeugnisses ist es, dass es dem menschlichen Auge in der Durchsicht den gleichen Farbeindruck vermittelt wie ein Erzeugnis, das in allen Schichten vollständig eingefärbt ist beziehungsweise wie ein Erzeugnis, das in der Basisschicht C eingefärbt ist.

Die erfindungsgemäßen mehrschichtigen Erzeugnisse haben den Vorteil, dass sie witterungsstabil sind. Das wird insbesondere durch die Schicht A bewirkt. Sie haben eine hohe Schlagzähigkeit. Dies wird dadurch erreicht, dass die Farbmittel, die die Schlagzähigkeit verringern, nur in der dünnen Schicht B enthalten sind.

Die erfindungsgemäßen mehrschichtigen Erzeugnisse haben den Vorteil, dass sie sich auf günstige Weise herstellen lassen. Dadurch dass die farbige Schicht B coextrudiert werden kann, muss nur der Coextruder gefüllt und bei einen Farbwechsel gereinigt werden und nicht der Hauptextruder, wie dies bei durchgängig eingefärbten Systemen der Fall ist. Besonders bei dicken Platten macht sich das bemerkbar (Das Volumen des Coextruders ist signifikant kleiner als das des Hauptextruders).

Die erfindungsgemäßen mehrschichtigen Erzeugnisse sehen aus wie volleingefärbte Systeme oder Systeme, bei denen die Farbmittel in der Schicht B vorliegen. Sie können neben den genannten Vorteilen auch noch den Vorteil der größeren Brandfestigkeit im Brandschachttest nach DIN 4102 haben.

Transparente thermoplastische Kunststoffe sind beispielsweise Polycarbonate, Copolyestercarbonate, Polyester, Copolyester, transparente Blends aus Polycarbonaten und Polyestern bzw. Copolyestern, Polyvinylchlorid, Polymethylmethacrylat, Polyethylmethacrylat, Polystyrol, Polysulfon, Styrol-Acrylnitril-Copolymerisate, Polyethersulfone, Polyethylen, Polypropylen oder transparente Mischungen der genannten Kunststoffe.

Bevorzugte Kunststoffe sind Polycarbonate, Copolyestercarbonate, Polyester, Copolyester, transparente Blends aus Polycarbonaten und Polyestern bzw. Copolyestern.

Ganz besonders bevorzugt ist Polycarbonat, dabei insbesondere Bisphenol-A-Homopolycarbonat.

Die Schichten A, B und C können verschiedene Kunststoffe oder den gleichen Kunststoff enthalten. Bevorzugt enthalten A, B und C den gleichen Kunststoff.

Der Lack, der in Schicht A enthalten sein kann, ist die getrocknete oder ausgehärtete Beschichtung, die aus einem Beschichtungsmittel erhältlich ist. Es ist hier also nicht das Beschichtungsmittel gemeint, das noch auf ein Substrat aufgetragen werden kann und danach erst aushärtet.

Lacke, die in Schicht A enthalten sein können sind beispielsweise Acrylatlacke, Siliconlacke, Polyurethanlacke.

In einer besonderen Ausführungsform der Erfindung enthält Schicht A Farbmittel.

In einer besonderen Ausführungsform der Erfindung enthält Schicht A UV-Absorber (bevorzugt 2 bis 10 Gew.-%).

In einer besonderen Ausführungsform der Erfindung enthält Schicht B UV-Absorber (bevorzugt weniger als 1 Gew.-%).

In einer besonderen Ausführungsform der Erfindung enthält Schicht C UV-Absorber (bevorzugt weniger als 1 Gew.-%).

In Besonderen Ausführungsformen der vorliegenden Erfindung ist das mehrschichtige Erzeugnis eine mehrschichtige Platte. Diese kann ausgeführt sein als massive Platte, die eben oder gewellt sein kann, oder als Stegplatte (auch Hohlkammerplatte genannt), die ebenfalls eben oder gewellt sein kann.

Die Schichten A, B und C können durch Coextrusion gemeinsam hergestellt werden, wenn Schicht A einen thermoplastischen Kunststoff enthält.

Wenn Schicht A einen Lack enthält, dann kann Schicht A durch Lackieren auf ein Substrat aufgebracht werden, das die Schichten B und C enthält.

Die Lichttransmission (nach ASTM D 1003) des mehrschichtigen Erzeugnisses liegt bevorzugt zwischen 5 % und 60 %, besonders bevorzugt zwischen 10 % und 55 %, ganz besonders bevorzugt zwischen 25 % und 40 %.

Das erfindungsgemäße mehrschichtige Erzeugnis kann außer den Schichten A, B und C weitere Schichten enthalten.

In einer besonderen Ausführungsform der vorliegenden Erfindung besteht das mehrschichtige Erzeugnis aus den Schichten A, B und C. Weitere Schichten sind nicht vorhanden.

Die Reihenfolge der Schichten A, B und C ist beliebig. A ist bevorzugt eine Außenschicht. In einer besonderen Ausführungsform ist die Reihenfolge A, dann B und dann C. In einer weiteren besonderen Ausführungsform ist die Reihenfolge A, C, B.

Das erfindungsgemäße mehrschichtige Erzeugnis kann zum Beispiel folgende Schichtfolge aufweisen:

A-B-C-A, A-B-C-B-A, A-B-C-B oder A-B-C-D, A-C-B oder A-C-B-A. Dabei ist D ungleich A, B und C.

In einer besonderen Ausführungsform der vorliegenden Erfindung ist die Schicht A eine außen am Erzeugnis liegende Schicht. Das heißt, dass auf der einen Seite von Schicht A keine weitere Schicht aufgebracht ist.

In einer Ausführungsform der vorliegenden Erfindung sind Farbmittel in dem thermoplastischen Kunststoff lösliche Farbstoffe, die Licht zwischen 400 nm und 750 nm absorbieren, und daher einen mit dem menschlichen Auge wahrnehmbaren Farbeindruck erzeugen. UV-Absorber und IR-Absorber werden hier nicht als Farbmittel verstanden. UV-Absorber und IR-Absorber haben in der Regel eine Absorptionsmaximum zwischen 300 nm und 399 nm oder zwischen 751 nm und 1300 nm. Zwischen 400 nm und 750 nm können UV-Absorber und IR-Absorber in geringem Umfang Licht absorbieren.

In einer Ausführungsform der vorliegenden Erfindung sind Farbmittel Pigmente, die in dem thermoplastischen Kunststoff nicht löslich sind, sondern als Teilchen vorliegen. Pigmente können sowohl anorganisch als auch organisch sein. Sie sind bevorzugt entweder organische Verbindungen oder anorganische Salze (gegebenenfalls Metallpartikel, gegebenenfalls Mehrschicht-Pigmente). Die erfindungsgemäßen Pigmente absorbieren und/oder streuen das Licht zwischen 400 nm und 750 nm (gegebenenfalls stärker als außerhalb dieses Bereiches). Die Größe der Pigmente ist bevorzugt 1 nm bis 1 mm, besonders bevorzugt 5 nm bis 400 µm, ganz besonders bevorzugt 200 nm bis 1500 µm.

Schicht A kann andere oder gleiche Farbmittel enthalten wie Schicht B. Die GesamtKonzentration der organischen Farbstoffe in Schicht A und auch die GesamtKonzentration der anorganischen Pigmente in Schicht A ist bevorzugt geringer als die Gesamtkonzentration in Schicht B. Besonders bevorzugt sind beide um 60 % geringer, ganz besonders bevorzugt um 80 % geringer.

Schicht C kann andere oder gleiche Farbmittel enthalten wie Schicht B, die GesamtKonzentration der organischen Farbstoffe in Schicht C wie auch die GesamtKonzentration der anorganischen Pigmente in Schicht C ist bevorzugt geringer als in Schicht B. Besonders bevorzugt sind beide um 70 % geringer, ganz besonders bevorzugt sind beide um 90 % geringer.

Erfindungsgemäß können beliebige UV-Absorber verwendet werden. Bevorzugt sind die folgenden:
a) Benzotriazol-Derivate: 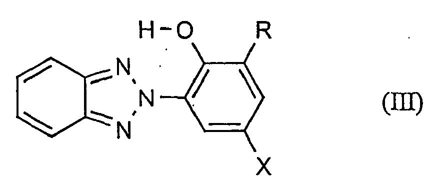 wobei
   - R und X: gleich oder verschieden H oder Alkyl oder Alkylaryl sind.
b) Dimere Benzotriazol-Derivate: 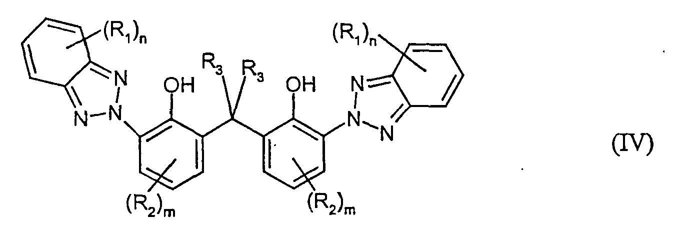 worin
   - R¹ und R²: gleich oder verschieden sind und H, Halogen, C₁-C₁₀-Alkyl, C₅-C₁₀-Cycloalkyl, C₇-C₁₃-Aralkyl, C₆-C₁₄-Aryl, -OR⁵ oder -(CO)-O-R⁵ bedeuten mit
   - R⁵: H oder C₁-C₄-Alkyl,R³ und R⁴ ebenfalls gleich oder verschieden sind und H, C₁-C₄-Alkyl, C₅-C₆-Cycloalkyl, Benzyl oder C₆-C₁₄-Aryl bedeuten,
   - m: 1,2 oder 3 ist und
   - n: 1,2,3 oder 4 ist, 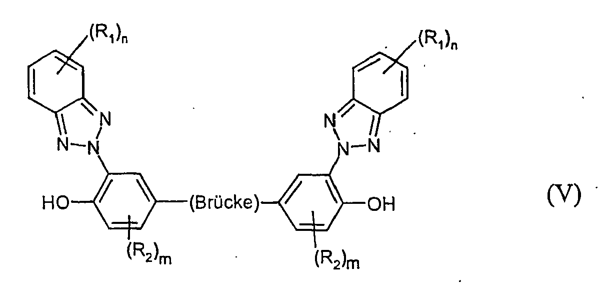
   worin die Brücke 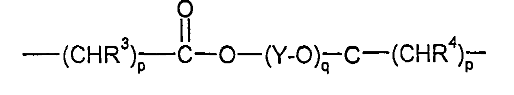 bedeutet,
   R¹, R², m und n die für Formel (IV) genannte Bedeutung haben,
   worin außerdem p eine ganze Zahl von 0 bis 3 ist, q eine ganze Zahl von 1 bis 10 ist,
   Y -CH₂-CH₂-, -(CH₂)₃-, -(CH₂)₄-, -(CH₂)₅-, -(CH₂)₆-, oder CH(CH₃)-CH₂ - ist und R³ und R⁴ die für Formel (II) genannte Bedeutung haben;
c) Triazin-Derivate 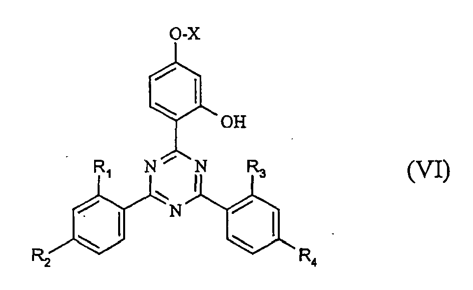 wobei
   - R₁, R₂, R₃, R₄: in Formel (VI) gleich oder verschieden H oder Alkyl oder CN oder Halogen und
   - X: Alkyl sind.
d) Triazin-Derivate
   wie in EP1033243
e) Dimere Triazin-Derivate 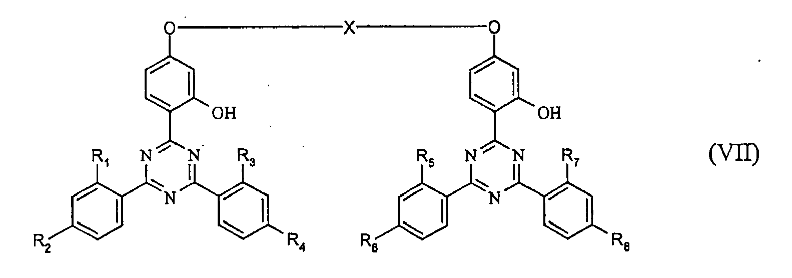 wobei
   - R₁, R₂, R₃, R₄, R₅, R₆, R₇, R₈: in Formel (VII) gleich oder verschieden H oder Alkyl oder CN oder Halogen und
   - X: Alkyl oder -(CH2CH2-O-)n-C(=O)- sind.
f) Diarylcyanoacrylate 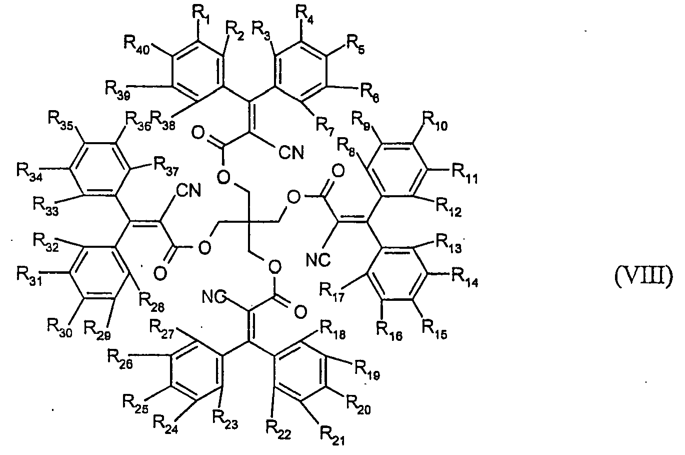 wobei
   - R₁ bis R₄₀: gleich oder verschieden H, Alkyl, CN oder Halogen sind.
g) Diarylcyanoacrylate der Formel (IX) 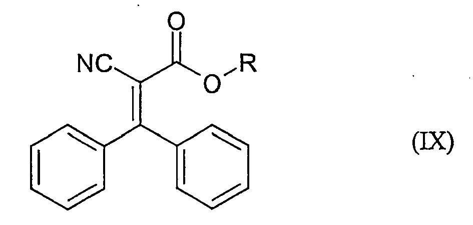 worin
   - R: gleich C₂-Alkyl bis C₁₀-Alkyl oder Aryl ist.

Bevorzugt dabei sind Uvinul 3035 mit R=C₂H₅ und Uvinul 3039 mit R = CH₂CH(C₂H₅)C₄H₉.
h) Hydroxybenzophenon-Derivate 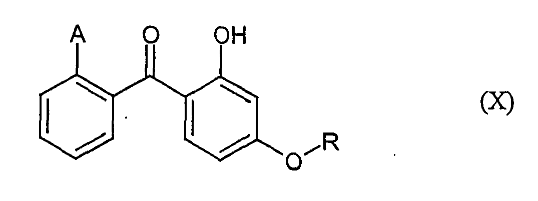 worin
   - A: gleich H oder OH ist
   und
   - R: gleich H, Alkyl, Acyl, -(CH₂)ₙ-O-(CH₂)ₙ-CH₃, -(CH₂)n-O-C(=O)-(CH₂)ₙ-CH₃ ist, mit n=1-20
i) Resorcin-Derivate 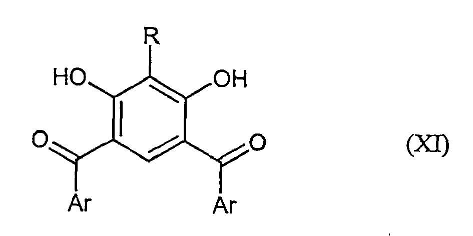 worin
   - Ar: gleich Phenyl, Naphthyl, Alkylphenyl, Alkoxyphenyl und
   - R: gleich H, Alkyl, Isoalkyl, Cycloalkyl, Acyl, -(CH₂)ₙ-O-(CH₂)ₙ-CH₃, -(CH₂)ₙ-O-C(=O)-(CH₂)ₙ-CH₃, -C(=O)-(CH₂)ₙ-CH₃, -C(=O)-Ar, ist, mit n=1-20

Ein oder mehr UV-Absorber können in allen Schichten enthalten sein.

In Schicht A werden bevorzugt folgende UV-Absorber der Formeln III (z.B. Tinuvin 234), IV (z.B. Tinuvin 360), VI (z.B. Tinuvin 1577), VIII (z.B. Uvinul 3030), X (z.B. Chinaassorb 81) verwendet.

In Schicht B und C werden bevorzugt folgende UV-Absorber der Formeln III (z.B. Tinuvin 329, Tinuvin 350, Tinuvin 234), IV (z.B. Tinuvin 360), VI (z.B. Tinuvin 1577), VIII (z.B. Uvinul 3030), IX (z.B. Uvinul 3035, Uvinul 3039) und X (z.B. Chinaassorb 81) verwendet.

Das erfindungsgemäße mehrschichtige Erzeugnis kann zum Beispiel als Platte für Trennwände, Bedachungen oder ähnliches verwendet werden. Rohre können zum Beispiel zum Transport von Flüssigkeiten oder Gasen verwendet werden. Profile können als Baumaterialien verwendet werden.

## Patentansprüche

1. Ein mehrschichtiges Erzeugnis enthaltend
a) eine Schicht A enthaltend ein Basismaterial ausgewählt aus der Gruppe bestehend aus einem transparenten thermoplastischen Kunststoff und einem Lack und enthaltend mindestens einen UV-Absorber,
b) eine Schicht B enthaltend einen transparenten thermoplastischen Kunststoff und enthaltend mindestens ein Farbmittel
c) und eine Schicht C enthaltend einen transparenten thermoplastischen Kunststoff,
wobei die Schicht B eine Dicke von 1 bis 500 µm hat,
die Schicht A 0,01 bis 10 mal so dick ist wie die Schicht B und
die Schicht C 20 bis 10000 mal so dick ist wie die Schicht B.

2. Mehrschichtiges Erzeugnis nach Anspruch 1, wobei die Gesamtkonzentration der organischen Farbstoffe und anorganischen Pigmente in Schicht A um mindestens 60 % geringer und die in Schicht C um mindestens 70 % geringer ist als die in Schicht B,

3. Das mehrschichtige Erzeugnis nach Anspruch 1 oder Anspruch 2 ausgewählt aus der Gruppe bestehend aus einer Platte, einer Folie, einem Rohr und einem Profil.

4. Ein Verfahren zur Herstellung des mehrschichtigen Erzeugnisses nach einem der Ansprüche 1 bis 3 umfassend eine Coextrusion der Schichten A, B und C.

5. Ein Verfahren zur Herstellung des mehrschichtigen Erzeugnisses nach einem der Ansprüche 1 bis 3 umfassend das Aufbringen der Schicht A durch Lackierung auf ein Substrat, das die Schichten B und C umfasst.

## Claims

1. A multilayer product containing
a) a layer A containing a base material selected from the group comprising a transparent thermoplastic material and a lacquer and containing at least one UV absorber,
b) a layer B containing a transparent thermoplastic material and containing at least one colourant, and
c) a layer C containing a transparent thermoplastic material,
wherein the layer B has a thickness of 1 to 500 µm,
the layer A is 0.01 to 10 times as thick as the layer B, and
the layer C is 20 to 10,000 times as thick as the layer B.

2. A multilayer product according to claim 1, wherein the total concentration of the organic dyes and inorganic pigments in layer A is at least 60% less, and in layer C is at least 70% less than in layer B.

3. The multilayer product according to claim 1 or claim 2, selected from the group comprising a sheet, a film, a pipe and a profiled section.

4. A process for the production of the multilayer product according to any one of claims 1 to 3 involving a co-extrusion of the layers A, B and C.

5. A process for the production of the multilayer product according to any one of claims 1 to 3 involving the application of the layer A by lacquering to a substrate that comprises the layers B and C.

## Revendications

1. Produit multicouche comprenant
a) une couche A contenant un matériau de base sélectionné parmi le groupe constitué d'une matière plastique thermoplastique transparente et d'un vernis et contenant au moins un absorbant UV,
b) une couche B contenant une matière plastique thermoplastique transparente et contenant au moins un colorant
c) et une couche C contenant une matière plastique thermoplastique transparente,
la couche B ayant une épaisseur de 1 à 500 *µ*m,
la couche A étant 0,01 à 10 fois aussi épaisse que la couche B et
la couche C étant 20 à 10000 fois aussi épaisse que la couche B.

2. Produit multicouche suivant la revendication 1, la concentration totale des colorants organiques et pigments minéraux dans la couche A étant au moins de 60 % plus faible et celle dans la couche C au moins 70 % plus faible que celle dans la couche B.

3. Produit multicouche suivant la revendication 1 ou la revendication 2 sélectionné
parmi le groupe comprenant une plaque, un film, un tube et un profilé.

4. Procédé de fabrication du produit multicouche suivant l'une des revendications 1 à 3, comprenant une coextrusion des couches A, B et C.

5. Procédé de fabrication du produit multicouche suivant l'une des revendications 1 à 3, comprenant l'application de la couche A par laquage sur un substrat comprenant les couches B et C.
